# EUROPEAN PATENT APPLICATION

(11) **EP 4 299 658 A1**
(43) Date of publication of application: **03.01.2024**
(21) Application number: 22181604.4
(22) Date of filing: 28.06.2022
(51) Int. Cl.: C08K 3/015, C09D 5/14, C09D 7/63, C09D 7/65, C09D 17/00

(54) **LIQUID COLORANT FOR TINTING PAINT**

(71) Applicant: Chromaflo Technologies Europe B.V., 6136 KV Sittard (NL)
(72) Inventor: Driessen, Luc, 6136 KV Sittard (NL); Tacken-Wijnen, Mirjan, 6136 KV Sittard (NL); Thommassen, Peter, 6136 KV Sittard (NL)
(74) Representative: IPecunia

(57) **Abstract**

The invention relates to a liquid colorant comprising
a) 5-65 wt% of a pigment
b) 0-30 wt% of a filler
c) 3-25 wt% of a surfactant
d) 20-80 wt% of water
e) 0.1-0.6 wt% of a polyguanidine biocide
f) 400-6000 ppm of a iodo-preservative
wherein the ppm and wt% is relative to the total weight of the liquid colorant and
wherein said liquid colorant does not comprise isothiazolone.

## Description

The invention relates to liquid colorants for tinting paint compositions, a method to prepare the liquid colorants and use of the liquid colorants.

Architectural paint and stain manufacturers typically distribute premixed paints and stains in a small number of popular colors. To accommodate consumer desires and enable matching of existing painted or stained surfaces, manufacturers typically also distribute a set of tintable paints and several concentrated colorants. These are combined at point-of-sale outlets using colorant dispensing and shaker mixing equipment to make small batch lots of custom-tinted paint in a much larger array of colors than the limited color array available in premixed products.

The custom color systems from different paint manufacturers tend to have somewhat similar components. For example, a typical custom color paint system may employ several (e.g., 2 to 4) tintable paints ranging for example from a white base intended to accept at most a small quantity of colorant, to a relatively unpigmented clear base intended to accept a much larger quantity of colorant. Base paints may employ various binders (e.g., natural or synthetic resins), binder forms (e.g., solution polymers or latex polymers) and vehicles (e.g., solvent-borne or water-borne versions), and may provide various dried surface finishes (e.g., matt, semi-gloss or gloss finishes). Some manufacturers also sell colored base paints (e.g. a red, a blue and yellow colored base) which are intended to be combined with additional colorant(s) when one coat hiding power is desired for strongly-tinted custom paint shades. The colorants in custom color paint or stain systems may, for example, be volumetrically metered from a multiple-colorant dispensing station, with 12 colorants for paint or stain typically being employed in colorant dispensing stations for the U.S. market, and more (e.g., 16 or 24 colorants) sometimes being employed in other markets.

WO2010091418 describes liquid colorants that can be used in tinting systems.

Disadvantage of liquid tinting systems is the difficulty to prevent infection of bacteria, yeast and fungi and to avoid the formation of a dried film of colorant in the paint canister.

WO2020229903 describes biocidal substances (e.g. polymeric guanidines) used for technical applications.

US3470201 describes the use of diphenylguanidines for the preparation of dyestuffs used as colorants for ball-point pen inks. A specific formulation comprising 40% of the guanidine compound is disclosed. Moreover, it seems that suitable formulations of ball-point pen inks can be obtained using 30%-40% concentration of the dyestuff.

US5532413 describes antimicrobial compositions comprising alkyl guanidine halide salt, in particular the compositions comprise from about 25 to 35 weights % of the guanidine compounds.

The implementation in US of the Federal Insecticide, Fungicide and Rodenticide Act and in Europe of the Biocidal Product Directive drove regulatory initiatives to improve the functioning of the biocidal products market in US and in Europe, while ensuring important level of protection for humans and the environment. A step forward of current regulations focus on reducing the amounts of biocidal substances as polymeric guanidines and isothiazolinones (called also isothiazolone) in technical applications.

Hence, there is a need for liquid colorants, that can be used in tinting systems, having a minimum amount of biocidal substance sufficient to be active against bacteria, fungi and yeast. The desired liquid colorants and their dried film eventually formed in the canister have to be sterile, free of bacteria, yeast and fungi also at a long storage condition.

After extensive studies, the inventor(s) solved the above mentioned problems and developed new liquid colorants that can be favorably used in tinting systems for tinting base paint compositions.

### Summary of the invention

The invention relates to a liquid colorant comprising
a) 5-65 wt% of a pigment
b) 0-30 wt% of a filler
c) 3-25 wt% of a surfactant
d) 20-80 wt% of water
e) 0.1-0.6 wt% of a polyguanidine biocide
f) 400-6000 ppm of a iodo-preservative
wherein the ppm and wt% is relative to the total weight of the liquid colorant and wherein said liquid colorant does not comprise isothiazolone.

The liquid colorant according to the invention although does not comprise isothiazolone and has a low amount of polyguanidine biocide is surprisingly sterile, free of bacteria, yeast and fungi even under long storage condition and avoid the formation of bacteria, yeast and fungi in the dried film which is commonly formed on the surface of the liquid colorant in the paint canister.

### Detailed description of the invention

The present invention relates to liquid colorant advantageously usable in liquid tinting systems.

A colorant is any substance (e.g. a dye, pigment, ink, or paint) that impacts color or modifies the hue of something else. A liquid colorant is a liquid composition, which can be added to a point- of sale container whose interior volume is largely (e.g. two thirds of the container volume or more) but not completely already filled with a base paint so as to alter the hue or lightness of such base paint, and which composition contains pigment or dye.

According to current Federal Insecticide, Fungicide and Rodenticide Act (US) and Biocidal Product Directive (Europe), the amount of biocidal substances, in particular polyguanidine biocide and isothiazolone commonly used in liquid colorant has to be strongly reduced or completely avoided for the protection of humans and of the environment.

One embodiment of the present invention relates to a liquid colorant comprising
a) 5-65 wt% of a pigment
b) 0-30 wt% of a filler
c) 3-25 wt% of a surfactant
d) 20-80 wt% of water
e) 0.1-0.6 wt% of a polyguanidine biocide
f) 400-6000 ppm of a iodo-preservative
wherein the ppm and wt% is relative to the total weight of the liquid colorant and wherein said liquid colorant does not comprise isothiazolone.

The inventor(s) of the present application, found that a simple reduction of the quantity of polyguanidine biocide and the complete elimination of isothiazolone was not providing sterility in the liquid colorant and in the dried film eventually formed on the surface of the liquid colorant in the paint canister. Surprisingly, the presence of a preservative (e.g. lodopropynyl Butyl Carbamate (IPBC)), used in a specific range, provided a liquid colorant without the previously mentioned problems.

The pigments used in the liquid colorants according to the invention can be inorganic or organic in nature and can, for example, be chosen from metal oxides formed from a variety of metals, e.g., from aluminum, antimony, bismuth, boron, chromium, cobalt, gallium, indium, iron, lanthanum, lithium, magnesium, manganese, molybdenum, neodymium, nickel, niobium, silicon, tin, titanium, vanadium or zinc. It will be appreciated that the pigment component may also comprise mixtures of various organic or various inorganic pigments or mixtures of organic and inorganic pigments.

The pigment component may comprise one or more pigments. It will be appreciated that mixtures of two or more pigments can also be used.

The pigments are present in finely divided form. Accordingly, their median particle size is typically in the range from 0.01 to 5 µm.

The inorganic pigments used can be chromatic, black and white pigments (color pigments) and also luster pigments. Typical organic pigments are chromatic and black pigments. Examples of suitable organic pigments are: monoazo pigments: C.I. Pigment Brown 25; C.I. Pigment Orange 5, 13, 36, 38, 64 and 67; C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 and 251; C.I. Pigment Yellow 1, 3, 62, 65, 73, 74, 97, 120, 151, 154, 168, 181, 183 and 191; C.I. Pigment Violet 32; disazo pigments: C.I. Pigment Orange 16, 34, 44 and 72; C.I. Pigment Yellow 12, 13, 14, 16, 17, 81, 83, 106, 113, 126, 127, 155, 174, 176, 180 and 188; disazo condensation pigments: C.I. Pigment Yellow 93, 95 and 128; C.I. Pigment Red 144, 166, 214, 220, 221, 242 and 262; C.I. Pigment Brown 23 and 41; anthanthrone pigments: C.I. Pigment Red 168; anthraquinone pigments: C.I. Pigment Yellow 147, 177 and 199; C.I. Pigment Violet 31; anthrapyrimidine pigments: C.I. Pigment Yellow 108; quinacridone pigments: C.I. Pigment Orange 48 and 49; C.I. Pigment Red 122, 202, 206 and 209; C.I. Pigment Violet 19; quinophthalone pigments: C.I. Pigment Yellow 138; diketopyrrolopyrrole pigments: C.I. Pigment Orange 71, 73 and 81; C.I. Pigment Red 254, 255, 264, 270 and 272; dioxazine pigments: C.I. Pigment Violet 23 and 37; C.I. Pigment Blue 80; flavanthrone pigments: C.I. Pigment Yellow 24; indanthrone pigments: C.I. Pigment Blue 60 and 64; isoindoline pigments: C.I. Pigment Orange 61 and 69; C.I. Pigment Red 260; C.I. Pigment Yellow 139 and 185; isoindolinone pigments: C.I. Pigment Yellow 109, 110 and 173; isoviolanthrone pigments: C.I. Pigment Violet 31; metal complex pigments: C.I. Pigment Red 257; C.I. Pigment Yellow 117, 129, 150, 153 and 177; C.I. Pigment Green 8; perinone pigments: C.I. Pigment Orange 43; C.I. Pigment Red 194perylene pigments: C.I. Pigment Black 31 and 32; C.I. Pigment Red 123, 149, 178, 179, 190 and 224; C.I. Pigment Violet 29; phthalocyanine pigments: C.I. Pigment Blue 15, 15:1, 15:2, 15:3, 15:4, 15:6 and 16; C.I. Pigment Green 7 and 36; pyranthrone pigments: C.I. Pigment Orange 51; C.I. Pigment Red 216; pyrazoloquinazolone pigments:C.I. Pigment Orange 67; C.I. Pigment Red 251; thioindigo pigments: C.I. Pigment Red 88 and 181; C.I. Pigment Violet 38; triarylcarbonium pigments: C.I. Pigment Blue 1, 61 and 62; C.I. Pigment Green 1; C.I. Pigment Red 81, 81:1 and 169; C.I. Pigment Violet 1, 2, 3 and 27; C.I. Pigment Black 1 (aniline black); C.I. Pigment Yellow 101 (aldazine yellow); C.I. Pigment Brown 22.

Examples of suitable inorganic pigments are: white pigments: titanium dioxide (C.I. Pigment White 6), zinc white, pigment grade zinc oxide; zinc sulfide, lithopone; black pigments: iron oxide black (C.I. Pigment Black 11), iron manganese black, spinel black (C.I. Pigment Black 27); carbon black (C.I. Pigment Black 7);chromatic pigments: chromium oxide, chromium oxide hydrate green; chrome green (C.I. Pigment Green 48); cobalt green (C.I. Pigment Green 50); ultramarine green; cobalt blue (C.I. Pigment Blue 28 and 36; al. Pigment Blue 72); ultramarine blue; manganese blue; ultramarine violet; cobalt violet and manganese violet; red iron oxide (C.I. Pigment Red 101); cadmium sulfoselenide (C.I. Pigment Red 108); cerium sulfide (C.I. Pigment Red 265); molybdate red (C.I. Pigment Red 104); ultramarine red; brown iron oxide (C.I. Pigment Brown 6 and 7), mixed brown, spinel phases and corundum phases (C.I. Pigment Brown 29, 31, 33, 34, 35, 37, 39 and 40), chromium titanium yellow (C.I. Pigment Brown 24), chrome orange; cerium sulfide (C.I. Pigment Orange 75); yellow iron oxide (C.I. Pigment Yellow 42); nickel titanium yellow (C.I. Pigment Yellow 53; C.I. Pigment Yellow 157, 158, 159, 160, 161, 162, 163, 164 and 189); chromium titanium yellow; spinel phases (C.I. Pigment Yellow 119); cadmium sulfide and cadmium zinc sulfide (C.I. Pigment Yellow 37 and 35); chrome yellow (C.I. Pigment Yellow 34); bismuth vanadate (C.I. Pigment Yellow 184).

Luster pigments are platelet-shaped pigments having a monophasic or polyphasic construction whose color play is marked by the interplay of interference, reflection and absorption phenomena. Examples are aluminum platelets and aluminum, iron oxide and mica platelets bearing one or more coats, especially of metal oxides.

The pigments are preferably chosen from the oxides/hydroxides pigments, mixed metal oxides pigments, carbon black pigments, monoazos, naphtol AS, benzimidazolone, isoindolin(one)e and polycyclic pigments.

Examples of suitable colorants to be used with the present invention are Universal colorants and water borne colorants. Universal colorants may be used in Alkyd solvent borne paints while water borne colorants may be used in water borne paints.

For the purposes of the present invention, the term Alkyd solvent borne paints refers to a paint which comprises higher levels of solvents or organic compounds than water borne paint. These solvents or organic compounds facilitate application, drying and the formation of a durable, regular paint film.

Examples of suitable Universal colorants are Universal pigments PBk7 (Pigment Black 7), Universal PR122 (Pigment Red 122), Universal PY42 (Pigment Yellow 42) Universal pigment PV23 (Pigment Alpafast Violet).

An examples of suitable water borne colorants is water borne PR122 (Pigment Red 122).

The amount of pigments is between 5 and 65 wt% relative to the total weight of the liquid colorant. In one embodiment the amount of pigments is between 10 and 50 wt%, relative to the total weight of the liquid colorant. In a further embodiment the amount of pigments is between 20 and 40 wt%, relative to the total weight of the liquid colorant.

The liquid colorant according to the present invention can contain colorless fillers. The fillers are usually insoluble in the solvent and are selected in particular from the following chemical classes (not only products of natural origin but also products of synthetic origin being recited by way of example): oxides and hydroxides: natural: aluminum oxide and magnesium oxide; synthetic: aluminum hydroxide and magnesium hydroxide; silicon dioxide and silicates: natural: quartz, christobalite, kieselguhr, talc, kaolin, diatomaceous earth, mica, wollastonite and feldspar; synthetic: fumed silica, precipitated silica, aluminosilicates and calcined aluminosilicates; carbonates: natural: carbonates of calcium and of magnesium, such as calcite, chalk, dolomite and magnesite; synthetic: precipitated calcium carbonate; sulfates: natural: sulfates of barium and of calcium, such as barite and gypsum; synthetic: precipitated barium sulfate.

The amount of colorless fillers is between 0 and 30 wt% relative to the total weight of the liquid colorant. In one embodiment the amount of colorless fillers is between 5 and 25 wt%, relative to the total weight of the liquid colorant. In a further embodiment the amount of fillers is between 10 and 20 wt%, relative to the total weight of the liquid colorant.

The liquid colorant according to the present invention comprises surfactants. The surfactants used in the liquid colorants according to the invention are chosen in combination with the type of pigment and the color desired for the liquid colorants.

Surfactants are compounds that lower the surface tension of a liquid, the interfacial tension between two liquids, or the interfacial tension between a liquid and a solid. In solutions this behavior is known as wetting, and it occurs as a result of surfactants adsorbing to the air/water interface. Surfactants may act as detergents, wetting agents, emulsifiers, foaming agents, and dispersants. Surfactants are used to stabilize the dispersion of polymer particles during emulsion polymerization in paints and other applications. The mechanical stability, freeze-thaw stability and shelf-life of paints are all improved by the addition of surfactants.

The amount of surfactants is between 3 and 12 wt% relative to the total weight of the liquid colorant. In one embodiment the amount of surfactants is between 5 and 10 wt%, relative to the total weight of the liquid colorant. In a further embodiment the amount of surfactants is between 7 and 10 wt%, relative to the total weight of the liquid colorant.

Useful surfactants are in particular nonionic and/or anionic water-soluble surface-active additives. Particularly suitable nonionic surfactants are based on polyethers. As well as the unmixed polyalkylene oxides, preferably C₂-C₄-alkylene oxides and phenyl-substituted C₂-C₄-alkylene oxides, especially polyethylene oxides, polypropylene oxides and poly(phenylethylene oxide)s, it is in particular block copolymers, especially polymers having polypropylene oxide and polyethylene oxide blocks or poly(phenylethylene oxide) and polyethylene oxide blocks, and also random copolymers of these alkylene oxides which are suitable. These polyalkylene oxides are obtainable by polyaddition of alkylene oxides onto starter molecules such as saturated or unsaturated aliphatic and aromatic alcohols, saturated or unsaturated aliphatic and aromatic amines, saturated or unsaturated aliphatic carboxylic acids and carboxamides and also aromatic carboxamides and sulfonamides. Aromatic starter molecules may be substituted by C₁-C₂0-alkyl or C₇-C₃₀-aralkyl. It is customary to use from 1 to 300 mol and preferably from 3 to 150 mol of alkylene oxide per mole of starter molecule, although in the case of aromatic starter molecules the amounts of alkylene oxide are in particular in the range from 2 to 100 mol, preferably in the range from 5 to 50 mol and especially in the range from 10 to 30 mol. The polyaddition products may have a terminal OH group or be end group capped, being in the form of C₁-C₆-alkyl ethers for example.

Suitable aliphatic alcohols comprise in general from 6 to 26 carbon atoms and preferably from 8 to 18 carbon atoms and can have an unbranched, branched or cyclic structure. Examples are octanol, nonanol, decanol, isodecanol, undecanol, dodecanol, 2-butyloctanol, tridecanol, isotridecanol, tetradecanol, pentadecanol, hexadecanol (cetyl alcohol), 2-hexyldecanol, heptadecanol, octadecanol (stearyl alcohol), 2-heptyl-undecanol, 2-octyldecanol, 2-nonyltridecanol, 2-decyltetradecanol, oleyl alcohol and 9-octadecenol and also mixtures of these alcohols, such as C₈/C₁0, C₁₃/C₁5 and C₁₆/C₁8 alcohols, and cyclopentanol and cyclohexanol. Of particular interest are the saturated and unsaturated fatty alcohols obtained from natural raw materials by lipolysis and reduction and the synthetic fatty alcohols from the oxo process. The alkylene oxide adducts with these alcohols typically have average molecular weights Mₙ from 200 to 5000.

Examples of the above-mentioned aromatic alcohols include not only unsubstituted phenol and α- and β-naphthol but also the alkyl-substituted products, which are substituted in particular by C₁-C₁2-alkyl, preferably C₄-C₁2-alkyl or C₁-C₄-alkyl, and the aralkyl-substituted products, in particular C₇-C₃₀-aralkyl-substituted phenol, such as hexylphenol, heptylphenol, octylphenol, nonylphenol, isononylphenol, undecylphenol, dodecylphenol, di- and tributylphenol and dinonylphenol, and also bisphenol A and its reaction products with styrene, in particular bisphenol A substituted by a total of 4 phenyl-1-ethyl radicals in the ortho positions to the two OH groups.

Suitable aliphatic amines correspond to the above-mentioned aliphatic alcohols. Again of particular importance here are the saturated and unsaturated fatty amines which preferably have from 14 to 20 carbon atoms. Examples of aromatic amines are aniline and its derivatives. Useful aliphatic carboxylic acids include especially saturated and unsaturated fatty acids which preferably comprise from 14 to 20 carbon atoms and fully hydrogenated, partially hydrogenated and unhydrogenated resin acids and also polyfunctional carboxylic acids, for example dicarboxylic acids, such as maleic acid. Suitable carboxamides are derived from these carboxylic acids. As well as alkylene oxide adducts with monofunctional amines and alcohols it is alkylene oxide adducts with at least bifunctional amines and alcohols which are of very particular interest.

The at least bifunctional amines preferably have from 2 to 5 amine groups and conform in particular to the formula H₂N--(R¹--NR²)ₙ--H(R¹: C₂-C₆-alkylene; R²: hydrogen or C₁-C₆-alkyl; n: 1-5). Specific examples are: ethylenediamine, diethylenetriamine, triethylenetetramine, tetraethylenepentamine, 1,3-propylenediamine, dipropylenetriamine, 3-amino-1-ethyleneaminopropane, hexamethylenediamine, dihexamethylenetriamine, 1,6-bis(3-aminopropylamino)hexane and N-methyldipropylenetriamine, of which hexamethylenediamine and diethylenetriamine are more preferable and ethylenediamine is most preferable.

These amines are preferably reacted first with propylene oxide and then with ethylene oxide. The ethylene oxide content of the block copolymers is typically about 10% to 90% by weight. The average molecular weights Mₙ of the block copolymers based on polyfunctional amines are generally in the range from 1000 to 40.000 and preferably in the range from 1500 to 30.000.

The at least bifunctional alcohols preferably have from two to five hydroxyl groups. Examples are C₂-C₆-alkylene glycols and the corresponding di- and polyalkylene glycols, such as ethylene glycol, 1,2-propylene glycol, 1,3-propylene glycol, 1,2-butylene glycol, 1,4-butylene glycol, 1,6-hexylene glycol, dipropylene glycol and polyethylene glycol, glycerol and pentaerythritol, of which ethylene glycol and polyethylene glycol are more preferable and propylene glycol and dipropylene glycol are most preferable. Particularly preferred alkylene oxide adducts with at least bifunctional alcohols have a central polypropylene oxide block, i.e. are based on a propylene glycol or polypropylene glycol which is initially reacted with further propylene oxide and then with ethylene oxide. The ethylene oxide content of the block copolymers is typically in the range from 10% to 90% by weight. The average molecular weights Mₙ of the block copolymers based on polyhydric alcohols are generally in the range from 1000 to 20.000 and preferably in the range from 1000 to 15.000.

Such nonionic surface-active additives are known and commercially available for example under the names of Tetronic^{®}, Pluronic^{®} and Pluriol^{®} (BASF), Atlas^{®}, Symperonic, (Uniquema), Emulgator WN and 386 (Lanxess) and also Rhodasurf, Soprophor^{®} (Rhodia), Genopol (Clariant), Dowfax (Dow), Berol, Duomeen, Ethomeen (Akzo), Ethylan, (Akcros).

Examples of the water-soluble anionic surface-active agents which are particularly useful are additives based on polymers of ethylenically unsaturated carboxylic acids, additives based on polyurethanes , additives based on acidic phosphoric, phosphonic, sulfuric and/or sulfonic esters of the abovementioned polyethers and additives based on polycondensation products of aromatic sulfonic acids and formaldehyde.

It will be appreciated that it is also possible to use mixtures of a plurality of additives, i.e., not only mixtures of various nonionic additives but also mixtures of various anionic additives and also mixtures of nonionic and anionic additives.

Useful water-soluble anionic surface-active additives based on polymers of unsaturated carboxylic acids are particularly additives from the group of the homo- and copolymers of ethylenically unsaturated monocarboxylic acids and/or ethylenically unsaturated dicarboxylic acids, which may each further comprise interpolymerized vinyl monomers comprising no acid function, the alkoxylation products of these homo- and copolymers and the salts of these homo- and copolymers and their alkoxylation products.

As examples of carboxyl-containing monomers and of vinyl monomers there may be mentioned: acrylic acid, methacrylic acid and crotonic acid; maleic acid, maleic anhydride, maleic monoesters, maleic monoamides, reaction products of maleic acid with diamines, which may be oxidized to form derivatives comprising amine oxide groups, and fumaric acid, of which maleic acid, maleic anhydride and maleic monoamides are preferred; vinylaromatics, such as styrene, methylstyrene and vinyltoluene; ethylene, propylene, isobutene, diisobutene and butadiene; vinyl ethers, such as polyethylene glycol monovinyl ether; vinyl esters of linear or branched monocarboxylic acids, such as vinyl acetate and vinyl propionate; alkyl esters and aryl esters of ethylenically unsaturated monocarboxylic acids, in particular acrylic and methacrylic esters, such as methyl acrylate, ethyl acrylate, propyl acrylate, isopropyl acrylate, butyl acrylate, pentyl acrylate, hexyl acrylate, 2-ethylhexyl acrylate, nonyl acrylate, lauryl acrylate, hydroxyethyl acrylate, methyl methacrylate, ethyl methacrylate, propyl methacrylate, isopropyl methacrylate, butyl methacrylate, pentyl methacrylate, hexyl methacrylate, 2-ethylhexyl methacrylate, nonyl methacrylate, lauryl methacrylate and hydroxyethyl methacrylate and also phenyl acrylate, phenyl methacrylate, naphthyl acrylate, naphthyl methacrylate, benzyl acrylate and benzyl methacrylate; dialkyl esters of ethylenically unsaturated dicarboxylic acids, such as dimethyl maleate, diethyl maleate, dipropyl maleate, diisopropyl maleate, dibutyl maleate, dipentyl maleate, dihexyl maleate, di-2-ethylhexyl maleate, dinonyl maleate, dilauryl maleate, di-2-hydroxyethyl maleate, dimethyl fumarate, diethyl fumarate, dipropyl fumarate, diisopropyl fumarate, dibutyl fumarate, dipentyl fumarate, dihexyl fumarate, di-2-ethylhexyl fumarate, dinonyl fumarate, dilauryl fumarate, di-2-hydroxyethyl fumarate; vinylpyrrolidone; acrylonitrile and methacrylonitrile; of which styrene, isobutene, diisobutene, acrylic esters and polyethylene glycol monovinyl ether are preferred.

Polyacrylic acids in particular are to be mentioned as examples of preferred homopolymers of these monomers.

The copolymers of the monomers mentioned may be constructed of two or more and in particular three different monomers. The copolymers may be random, alternating, block or graft. Preferred copolymers are styrene-acrylic acid, acrylic acid-maleic acid, acrylic acid-methacrylic acid, butadiene-acrylic acid, isobutene-maleic acid, diisobutene-maleic acid and styrene-maleic acid copolymers, which may each comprise acrylic esters and/or maleic esters as additional monomeric constituents.

Preferably, the carboxyl groups of nonalkoxylated homo- and copolymers are wholly or partly present in salt form in order that solubility in water may be ensured. The alkali metal salts, such as sodium and potassium salts, and the ammonium salts are suitable for example.

The nonalkoxylated polymeric additives will typically have average molecular weights M_{w} in the range from 900 to 250 000. The molecular weight ranges particularly suitable for the individual polymers depend on their composition, of course. The molecular weight data which follow for various polymers are given by way of example: polyacrylic acids: M_{w} from 900 to 250 000; styrene-acrylic acid copolymers: M_{w} from 1000 to 50 000; acrylic acid-methacrylic acid copolymers: M_{w} from 1000 to 250 000; acrylic acid-maleic acid copolymers: M_{w} from 2000 to 70 000. As well as these homo- and copolymers themselves, their alkoxylation products are also of particular interest for use as additives.

These alkoxylation products are in particular polymers formed by partial to (if possible) complete esterification with polyether alcohols. The degree of esterification of these polymers is generally in the range from 30 to 80 mol %.

Useful polyether alcohols for the esterification are in particular alcohols such as ethanol, propanol, isopropanol, butanol, fatty alcohols, the polyether alcohols themselves, preferably polyethylene glycols and polypropylene glycols, and also their unilaterally endcapped derivatives, in particular the corresponding monoethers, such as monoaryl ethers, for example monophenyl ethers, and in particular mono-C₁-C₂6-alkyl ethers, for example ethylene and propylene glycols etherified with fatty alcohols, and the polyetheramines which are preparable for example by conversion of a terminal OH group of the corresponding polyether alcohols or by polyaddition of alkylene oxides onto preferably primary aliphatic amines. Preference here is given to polyethylene glycols, polyethylene glycol monoethers and polyetheramines. The average molecular weights Mₙ of the polyether alcohols used and of their derivatives are typically in the range from 200 to 10 000.

Specific surface-active properties can be achieved for the additives by varying the ratio of polar to apolar groups.

These anionic surface-active additives are likewise known and commercially available, for example under the names Sokalan^{®} (BASF), Joncryl^{®} (Johnson Polymer), Alcosperse^{®} (Alco), Geropon^{®} (Rhodia), Good-Rite^{®} (Goodrich), Neoresin^{®} (Avecia), Orotan^{®} and Morez^{®} (Rohm & Haas), Disperbyk^{®} (Byk) and also Tegospers^{®} (Degussa).

Useful anionic surface-active additives for inclusion in these pigment preparations further include polyurethane-based additives.

For the purposes of the present invention, the term "polyurethane" shall comprehend not just the pure reaction products of polyfunctional isocyanates with isocyanate-reactive hydroxyl-comprising organic compounds, but also these reaction products after additional functionalization through the addition of further isocyanate-reactive compounds, examples being carboxylic acids bearing primary or secondary amino groups. These additives are notable for their low ionic conductivity and their neutral pH compared with other surface-active additives. Useful polyfunctional isocyanates for preparing the additives are in particular diisocyanates, but compounds having three or four isocyanate groups can be used as well. Both aromatic and aliphatic isocyanates may be used.

Examples of preferred di- and triisocyanates are: 2,4-tolylene diisocyanate (2,4-TDI), 4,4'-diphenylmethane diisocyanate (4,4'-MDI), para-xylylene diisocyanate, 1,4-diisocyanatobenzene, tetramethylxylylene diisocyanate (TMXDI), 2,4'-diphenyl-methane diisocyanate (2,4'-MDI) and triisocyanatotoluene and also isophorone diisocyanate (IPDI), 2-butyl-2-ethylpentamethylene diisocyanate, tetramethylene diisocyanate, hexamethylene diisocyanate, dodecamethylene diisocyanate, 2,2-bis(4-isocyanatocyclohexyl)propane, trimethylhexane diisocyanate, 2-isocyanatopropylcyclohexyl isocyanate, 2,4,4-trimethylhexamethylene diisocyanate, 2,2,4-trimethylhexamethylene diisocyanate, 2,4'-methylenebis(cyclohexyl) diisocyanate, cis-cyclohexane 1,4-diisocyanate, trans-cyclohexane 1,4-diisocyanate and 4-methylcyclohexane 1,3-diisocyanate (H-TDI).

It will be appreciated that mixtures of isocyanates may also be used. There may be mentioned by way of example: mixtures of structural isomers of 2,4-tolylene diisocyanate and triisocyanatotoluene, examples being mixtures of 80 mol % of 2,4-tolylene diisocyanate and 20 mol % of 2,6-tolylene diisocyanate; mixtures of cis- and trans-cyclohexane 1,4-diisocyanate; mixtures of 2,4- or 2,6-tolylene diisocyanate with aliphatic diisocyanates, such as hexamethylene diisocyanate and isophorone diisocyanate.

Useful isocyanate-reactive organic compounds preferably include compounds having at least two isocyanate-reactive hydroxyl groups per molecule. Compounds useful as, however, further include compounds having only one isocyanate-reactive hydroxyl group per molecule. These monofunctionalized compounds can partly or else wholly replace the compounds which comprise at least two isocyanate-reactive hydroxyl groups per molecule, in the reaction with the polyisocyanate.

Examples of particularly preferred isocyanate-reactive compounds having at least two isocyanate-reactive hydroxyl groups per molecule will now be recited.

They are polyetherdiols, polyesterdiols, lactone-based polyesterdiols, diols and triols of up to 12 carbon atoms, dihydroxy carboxylic acids, dihydroxy sulfonic acids, dihydroxy phosphonic acids, polycarbonatediols, polyhydroxyolefins and polysiloxanes having on average at least two hydroxyl groups per molecule.

Useful polyetherdiols include for example homo- and copolymers of C₂-C₄-alkylene oxides, such as ethylene oxide, propylene oxide and butylene oxide, tetrahydrofuran, styrene oxide and/or epichlorohydrin, which are obtainable in the presence of a suitable catalyst, an example being boron trifluoride. Further useful polyetherdiols are obtainable by (co)polymerization of these compounds in the presence of a starter having at least two acidic hydrogen atoms, examples of a starter being water, ethylene glycol, thioglycol, mercaptoethanol, 1,3-propanediol, 1,4-butanediol, 1,6-hexanediol, 1,12-dodecanediol, ethylenediamine, aniline or 1,2-di-(4-hydroxyphenyl)propane.

Examples of particularly suitable polyetherdiols are polyethylene glycol, polypropylene glycol, polybutylene glycol and polytetrahydrofuran and also copolymers thereof. The molecular weight Mₙ of the polyetherdiols is preferably in the range from 250 to 5000 and more preferably in the range from 500 to 2500. Useful isocyanate-reactive compounds further include polyesterdiols (hydroxy polyesters), which are common knowledge.

Preferred polyesterdiols are the reaction products of diols with dicarboxylic acids or their reactive derivatives, examples being anhydrides or dimethyl esters. Useful dicarboxylic acids include saturated and unsaturated aliphatic and also aromatic dicarboxylic acids which may bear additional substituents, such as halogen. Preferred aliphatic dicarboxylic acids are saturated unbranched α,ω-dicarboxylic acids comprising from 3 to 22 and in particular from 4 to 12 carbon atoms.

Examples of particularly suitable dicarboxylic acids are: succinic acid, glutaric acid, adipic acid, suberic acid, azelaic acid, sebacic acid, 1,12-dodecanedicarboxylic acid, maleic acid, maleic anhydride, fumaric acid, itaconic acid, phthalic acid, isophthalic acid, phthalic anhydride, tetrahydrophthalic anhydride, hexahydrophthalic anhydride, tetrachlorophthalic anhydride, endomethylenetetrahydrophthalic anhydride, terephthalic acid, dimethyl terephthalate and dimethyl isophthalate.

Useful diols include in particular saturated and unsaturated aliphatic and cycloaliphatic diols. The aliphatic α,ω-diols which are particularly preferred are unbranched and have from 2 to 12, in particular from 2 to 8 and especially from 2 to 4 carbon atoms. Preferred cycloaliphatic diols are derived from cyclohexane.

Examples of particularly suitable diols are: ethylene glycol, propylene glycol, 1,3-propanediol, 1,4-butanediol, 2-methylpropane-1,3-diol, 1,5-pentanediol, neopentyl glycol, 1,6-hexanediol, 1,8-octanediol, 1,10-decanediol, 1,12-dodecanediol, cis-but-2-ene-1,4-diol, trans-but-2-ene-1,4-diol, 2-butyne-1,4-diol, cis-1,4-di(hydroxymethyl)-cyclohexane and trans-1,4-di(hydroxymethyl)cyclohexane. The molecular weight Mₙ, of the polyesterdiols is preferably in the range from 300 to 5000.

Lactone-based polyesterdiols useful as an isocyanate-reactive compound are based in particular on aliphatic saturated unbranched ω-hydroxy carboxylic acids having from 4 to 22 and preferably from 4 to 8 carbon atoms. It is also possible to use branched ω-hydroxy carboxylic acids wherein one or more --CH₂-- groups in the alkylene chain are replaced by -CH(C₁-C₄-alkyl)--.

Examples of preferred ω-hydroxy carboxylic acids are γ-hydroxybutyric acid and δ-hydroxyvaleric acid.

It will be appreciated that the abovementioned diols may likewise be used as isocyanate-reactive compounds, in which case the same preferences as above apply.

Triols, in particular triols having from 3 to 12 carbon atoms and especially triols having from 3 to 8 carbon atoms are likewise useful as isocyanate-reactive compounds. Trimethylolpropane is an example of a particularly suitable triol. Dihydroxy carboxylic acids useful as isocyanate-reactive compounds are in particular aliphatic saturated dihydroxy carboxylic acids which preferably comprise 4 to 14 carbon atoms. Dimethylolpropionic acid (DMPA) is a particularly preferred example of these dihydroxy carboxylic acids.

Useful isocyanate-reactive compounds further include the corresponding dihydroxy sulfonic acids and dihydroxy phosphonic acids, such as 2,3-dihydroxypropanephosphonic acid. Dihydroxy carboxylic acid as used herein shall also comprise compounds comprising more than one carboxyl function (or as the case may be anhydride or ester function). Such compounds are obtainable by reaction of dihydroxy compounds with tetracarboxylic dianhydrides, such as pyromellitic dianhydride or cyclopentanetetra-carboxylic dianhydride, in a molar ratio from 2:1 to 1.05:1 in a polyaddition reaction, and preferably have an average molecular weight Mₙ in the range from 500 to 10 000.

Examples of useful polycarbonatediols are the reaction products of phosgene with an excess of diols, in particular unbranched saturated aliphatic α,ω-diols having from 2 to 12, in particular from 2 to 8 and especially from 2 to 4 carbon atoms.

Polyhydroxyolefins useful as an isocyanate-reactive compound are in particular α,ω-dihydroxyolefins, and α,ω-dihydroxybutadienes are preferred.

Furthermore the polysiloxanes useful as an isocyanate-reactive compound comprise on average at least two hydroxyl groups per molecule. Particularly suitable polysiloxanes comprise on average from 5 to 200 silicon atoms (number average) and are in particular substituted by C₁-C₁2-alkyl groups, in particular methyl groups.

Examples of isocyanate-reactive compounds comprising just one isocyanate-reactive hydroxyl group are in particular aliphatic, cycloaliphatic, araliphatic or aromatic monohydroxy carboxylic acids and monohydroxy sulfonic acids.

It is possible in this connection, as well as the aforementioned isocyanate-reactive compounds, to add further compounds having isocyanate-reactive groups, for example dithiols, thio alcohols, such as thioethanol, amino alcohols, such as ethanolamine and N-methylethanolamine, or diamines, such as ethylenediamine, and to thereby prepare polyurethanes which, as well as urethane groups, additionally bear isocyanurate groups, allophanate groups, urea groups, biuret groups, uretidione groups or carbodiimide groups. Further examples of such isocyanate-reactive compounds are aliphatic, cycloaliphatic, araliphatic or aromatic carboxylic acids and sulfonic acids which bear at least two primary and/or secondary amino groups.

It will be appreciated that it is also possible to add corresponding compounds having just one isocyanate-reactive group, examples being monoalcohols, primary and secondary monoamines, monoamino carboxylic and sulfonic acids and mercaptans. Customary use levels range up to 10 mol %, based on.

Preferably, some or all of the carboxyl groups of the reaction products are in salt form in order that solubility in water may be ensured. Useful salts include for example alkali metal salts, such as sodium and potassium salts, and ammonium salts. Typically, the additives have average molecular weights M_{w} in the range from 500 to 250 000.

Specific surface-active properties can be achieved for the additives by varying the ratio of polar to apolar groups. Such anionic surface-active additives are known and commercially available, for example under the name Borchi^{®} GEN SN95 (Borchers).

Water-soluble anionic surface-active additives based on acidic phosphoric, phosphonic, sulfuric and/or sulfonic esters of polyethers are based in particular on the reaction products of the above-recited polyethers with phosphoric acid, phosphorus pentoxide and phosphonic acid on the one hand and sulfuric acid and sulfonic acid on the other. In the reaction, the polyethers are converted into the corresponding phosphoric mono- or diesters and phosphonic esters on the one hand and the sulfuric monoesters and sulfonic esters on the other. These acidic esters are preferably present in the form of water-soluble salts, in particular as alkali metal salts, especially sodium salts, and ammonium salts, but can also be used in the form of the free acids.

Preferred phosphates and phosphonates are derived especially from alkoxylated, in particular ethoxylated, fatty and oxo alcohols, alkylphenols, fatty amines, fatty acids and resin acids, and preferred sulfates and sulfonates are based in particular on alkoxylated, especially ethoxylated, fatty alcohols, alkylphenols and amines, including polyfunctional amines, such as hexamethylenediamine.

Such anionic surface-active additives are known and commercially available for example under the names of Nekal^{®} (BASF), Tamol^{®} (BASF), Crodafos^{®} (Croda), Rhodafac^{®} (Rhodia), Maphos^{®} (BASF), Texapon^{®} (Cognis), Matexil^{®} (ICI), Soprophor^{®} (Rhodia) and Lutensit^{®} (BASF).

Water-soluble anionic additives based on aromatic sulfonic acids and formaldehyde are based in particular on naphthalenesulfonic acid and are likewise preferably used in salt form, in particular as sodium salt. Their average molecular weight Mw is typically in the range from 4000 to 15 000.

The additives are likewise known and are for example commercially available under the name of Tamol^{®} (BASF).

Preferably, the surfactant to be used in the liquid colorant according to the present invention is selected from the list of soya Lecithin (Soy Lecithin), polyethyleenglycol-7 ricinoleate (PER-64),aqueous solution based on 1-Propanaminium and 3-amino-N-(carboxymethyl)-N,N-dimethyl derivatives and N-(C8-18 and C18-unsaturated acyl)derivatives (Agnique GLP 45), sotridecyl alcohol ethoxylate phosphate ester

(Phospholan PE169),ethoxylated ester produced from polyethylene glycol and lauric acid (Cithrol^{™} 4ML-LQ-(RB)), solution of modified polyurethane (Disperbyk-185),acid phosphoric ester of a fatty alcohol ethoxylate (Lutensit A-EP), polycarboxylate in aqueous solution (Coadis BR 3), 1-Hydroxyethylidene-1,1-diphosphonic acid (BRIQUEST ADPA-60A), coco monoethanolamide ethoxylate (AMADOL CMA8), ethoxylated castor oil (Agnique CSO-30), betaines coco alkyldimethyl (Amphoteen 24T), POE (5) sorbitan Monooleate (Lonzest SMO-5),ethoxylated cocoamide (Amadol CMA 12), block copolymers of polypropylene glycol flanked by polyethylene glycol groups(Pluronic PE 6100),acrylic block copolymer family of products made by Controlled Free Radical Polymerization (Dispex Ultra PX 4585), neutralized (potassium salt) form of a phosphate coester of aliphatic alcohols (STRODEX PK-90), Sodium polyacrylate (Dispex AA 4145 or DisperByk 185), star-shaped modified polyalkoxylate with neutral pigment affinic groups (DISPERBYK-2091), polyamine amide salt (DISPERBYK-2095), aqueous solution of a modified polymer with pigment affinity groups (Tego Dispers 750 W), non-ionic surfactant based on a synthetic primary alcohol (BEROL 185), polymer preparations and compounds (Cliqsperse 130), tristyryl phenol-polyethylene glycol ether (Emulsogen TS 200), Sotridecyl alcohol ethoxylate phosphate ester (Phospholan PE169), caster oil ethoxylates (BEROL 108) or a mixture thereof.

More preferably, the surfactant to be used in the liquid colorant according to the present invention is selected from the list of soya Lecithin (Soy Lecithin), polyethyleenglycol-7 ricinoleate (PER-64), aqueous solution based on 1-Propanaminium and 3-amino-N-(carboxymethyl)-N,N-dimethyl derivatives and N-(C8-18 and C18-unsaturated acyl)derivatives (Agnique GLP 45), betaines coco alkyldimethyl (Amphoteen 24T), sotridecyl alcohol ethoxylate phosphate ester (Phospholan PE169),ethoxylated ester produced from polyethylene glycol and lauric acid (Cithrol^{™} 4ML-LQ-(RB)), solution of modified polyurethane (Disperbyk-185),acid phosphoric ester of a fatty alcohol ethoxylate (Lutensit A-EP), polycarboxylate in aqueous solution (Coadis BR 3), ethoxylated castor oil (Agnique CSO-30), acrylic block copolymer family of products made by Controlled Free Radical Polymerization (Dispex Ultra PX 4585), Sodium polyacrylate (Dispex AA 4145 or DisperByk 185), aqueous solution of a modified polymer with pigment affinity groups (Tego Dispers 750 W), non-ionic surfactant based on a synthetic primary alcohol (BEROL 185), polymer preparations and compounds (Cliqsperse 130), tristyryl phenol-polyethylene glycol ether (Emulsogen TS 200), Sotridecyl alcohol ethoxylate phosphate ester (Phospholan PE169), caster oil ethoxylates (BEROL 108) or a mixture thereof.Even more preferably, the surfactant to be used in the liquid colorant according to the present invention is selected from the list of soya Lecithin (Soy Lecithin), polyethyleenglycol-7 ricinoleate (PER-64), Sodium polyacrylate (Dispex AA 4145), betaines coco alkyldimethyl (Amphoteen 24T), aqueous solution based on 1-Propanaminium and 3-amino-N-(carboxymethyl)-N,N-dimethyl derivatives and N-(C8-18 and C18-unsaturated acyl)derivatives (Agnique GLP 45), Sodium polyacrylate (DisperByk 185), ethoxylated castor oil (Agnique CSO-30), aqueous solution of a modified polymer with pigment affinity groups (Tego Dispers 750 W), Sotridecyl alcohol ethoxylate phosphate ester (Phospholan PE169), ethoxylated ester produced from polyethylene glycol and lauric acid (Cithrol^{™} 4ML-LQ-(RB)), caster oil ethoxylates (BEROL 108), polymer preparations and compounds (Cliqsperse 130), tristyryl phenol-polyethylene glycol ether (Emulsogen TS 200) or a mixture thereof.

The solvent component used in the liquid colorants according to the invention is water. Typically, the amount of water in the liquid colorant is from 30 to 80 wt% relative to the total weight of the liquid colorant. Preferably the amount of water in the liquid colorant is from 40 to 70 wt% relative to the total weight of the liquid colorant. More preferably the amount of water in the liquid colorant is from 50 to 60 wt% relative to the total weight of the liquid colorant.

The liquid colorants according to the present invention comprise polymeric guanidines biocide also called polyguanidines biocide. Polyguanidines biocide are polymeric biocide substances used as disifectants. They exhibit fungicidal as well as bactericidal activity against both Gram-positive and Gram-negative bacteria. Polyguanidines biocide, are known compounds, which are commercially available or may be produced by procedures known in the art, as disclosed in the patent application WO2020229903. Suitable examples of commercially available polymeric guanidines biocide are Xliquid^{®} (produced by Marwian) and Nouvex N950-9010.

Xliquid^{®} is a 25% solution of polyguanidine silicate salt with a molecular weight between 100 and 3000 Dalton and it is a broad spectrum guanidine based bactericide, yeasticide and algicide. It is also effective against living fungi mycelial. Xliquid^{®} is generally used in the field of medical care or in industry or domestic places for the formulation of disinfectants and sanitizers. May also be used for the preservation of polymer emulsions and dispersion for glues, adhesives paints, resins and coatings as well as textile layers. Nouvex N950-9010 is a biocompatible antimicrobial polymer,obtained by a polymerization process of polyethylene glycol with 4-vinyl piperidium. Nouvex N950-9010 removes and prevents bacterial contamination. Nouvex N950-9010 removes biofilm from plastics such as thermosets and thermoplastics and other non-food products, hence, it is used as an additive to compatible systems of thermoplastics, thermosets, coatings, and solutions rendering them antimicrobial.

Suitable polyguanidines biocide are polyhexamethylene guanidine, polyhexamethylene biguanidine, polyguanidine silicate and their derivatives thereof. For the purposes of the present invention, the term "derivatives" shall comprehend any compound that is derived from polyhexamethylene guanidine, polyhexamethylene biguanidine or polyguanidine silicate by a chemical reaction.

Hence, the term "derivatives" shall comprehend any salts, esters or metal complex of polyhexamethylene guanidine, polyhexamethylene biguanidine or polyguanidine silicate. In one embodiment of the present invention, the polyguanidine biocide is selected from the list of polyguanidine silicate salts, polyhexamethylene guanidine hydrochloride, polyhexamethylene biguanidine hydrochloride, polyhexamethylene guanidine stearate, polyhexamethylene biguanidine stearate and polyhexamethylene guanidine molibidate. In a specific embodiment of the present invention, the polyguanidine biocide isa polyguanidine silicate salt.

Preferably the amount of polyguanidine biocide in the liquid colorant is low, for example less than 2 wt%, preferably less than 1.5 wt% more preferably less than 1 wt%, relative to the total weight of the liquid colorant. In one embodiment of the present invention the amounts of polyguanidine biocide are in the range from 0.1 to 0.6 wt% relative to the total weight of the liquid colorant. Preferably the amount of polyguanidine biocide in the liquid colorant is from 0.2 to 0.5 wt% relative to the total weight of the liquid colorant. More preferably the amount of polyguanidine biocide in the liquid colorant is from 0.3 to 0.4 wt% relative to the total weight of the liquid colorant. As used herein the quantity of polyguanidine biocide of less than 2 wt% or less than 1.5 wt% or less than 1 wt% or of the range from 0.1 to 0.6 wt% or from 0.2 to 0.5 wt%, refers to the effective amount of polyguanidine biocide contained in the commercially available solutions. For example if a composition comprises 0.99 wt% of XLiquid^{®} 25%, the effective amount of polyguanidine biocide is 0,25 wt%.

The liquid colorants according to the present invention comprise preservatives. Preservatives are commonly used in water-based paints and coating, in wood and personal care products to protect these products from bacteria and germs. Under the current framework of the biocidal product regulation around 50 substances are acceptable preservatives. However, most of these substances cannot be used in paints and coatings for technical reasons. The antimicrobial efficacy needs to be broad; the stability needs to be efficient over a specific pH-range and temperature. Moreover, the water solubility of the preservative and its effect on color must be considered. The group of isothiazolinones ranks among the few preservatives that are effective against a large variety of harmful organisms. Furthermore, they can be easily combined to prevent resistance. Isothiazolinones have been commonly used in paints and coatings and also in cosmetic products but recently the use of isothiazolinones is governed by strict legal requirements and a voluntary agreement on labeling of the paint industry. For persons who have developed an isothiazolinone allergy called "sensitisation", which display allergic skin reactions, it is advised to resort to paints without isothiazolinone.

The liquid colorants according to the present invention does not comprise isothiazolone.

Suitable preservatives to be used in the present invention are iodo-preservative as Iodine, p-[(diiodomethyl)sulphonyl]toluene and lodopropynyl Butyl Carbamate (IPBC).ln a preferred embodiment of the present invention, the liquid colorants comprise lodopropynyl Butyl Carbamate (IPBC).

Preferably the amount of iodo-preservative in the liquid colorant is low, for example less than 6000 ppm, preferably less than 5000 ppm more preferably less than 2000 ppm, relative to the total weight of the liquid colorant. In one embodiment of the present invention the amounts of preservative are in the range from 400 to 6000 ppm relative to the total weight of the liquid colorant. Preferably the amount of preservative in the liquid colorant is from 450 to 5000 ppm, more preferably from 500 to 2000 ppm, even more preferably from 700 to 1000 ppm relative to the total weight of the liquid colorant.

Other suitable preservatives to be used in the present invention are bromo-preservative as 2-bromo-2-nitropropane-1,3-diol (Bronopol) and 2,2-dibromo-3-nitrilopropionamide (DBNPA).

In a preferred embodiment of the present invention, the liquid colorants comprise 2,2-dibromo-3-nitrilopropionamide (DBNPA).

Preferably the amount of bromo-preservative in the liquid colorant is low, for example less than 1000 ppm, preferably less than 500 ppm more preferably less than 200 ppm, relative to the total weight of the liquid colorant. In one embodiment of the present invention the amounts of preservative are in the range from 1 to 300 ppm relative to the total weight of the liquid colorant. Preferably the amount of preservative in the liquid colorant is from 1 to 200 ppm, more preferably from 5 to 150 ppm, even more preferably from 10 to 150 ppm relative to the total weight of the liquid colorant.

The liquid colorant of the invention may comprise one or more additives. Additives can be present in an amounts up to 10 wt%, preferably 0.1 - 5 wt%. The choice of additive type may depend on the choice of pigment and also the desired color.

The additives used in the liquid colorant according to the invention can be for example defoaming agents, binders, UV-stabilizers, humectants, pH stabilizers, rheology modifiers, siccatives, adhesion promoters, antioxidants, buffers, coalescing agents, extenders, leveling agents, neutralizers, optical brighteners, pearlescents, plasticizers, polymeric additives, reactive diluents, thickeners, tackifiers and waxes.

One of the additives that may be present in the liquid colorant are antioxidants. Examples of suitable antioxidants include the well-known classes of the sterically hindered phenols, of the aromatic amines, of the thiosynergists, of the phosphites and phosphonites and of the sterically hindered amines. Antioxidants based on sterically hindered phenols comprise, as an essential building block, a phenol substituted by at least one tert-butyl group ortho and in particular by a tert-butyl group in both ortho positions relative to the OH group. Most known products comprise a plurality of these building blocks, which are bonded to each other via various bridging members.

Antioxidants based on aromatic amines are mainly diarylamines, amine-ketone condensation products, for example aniline-acetone condensates, and substituted p-phenylenediamines.

Examples of thiosynergists are the metal salts of dialkyldithiocarbamic acids, zinc dialkyl dithiophosphates and esters (especially dilauryl, dimyristyl and distearyl esters) of thiodipropionic acid.

Antioxidants based on phosphites and phosphonites are typically the esters of the corresponding acids of phosphorus with alkyl-substituted, especially tert-butyl-substituted, phenols.

Antioxidants based on sterically hindered amines (HALS) comprise, as an essential building block, a 2,6-dialkyl-substituted, in particular a -dimethyl-substituted piperidine linked in position 4 to further piperidine building blocks via a wide range of bridging members.

Antioxidants are generally known and obtainable for example under the names of Irganox^{®}, Irgaphos^{®}, Chimassorb^{®} and Irgastab^{®} (Ciba), Topanol^{®} (ICI), Hostanox^{®} (Clariant) and Goodrite^{®} (Goodyear).

When the liquid pigment dispersion comprises an antioxidant, the antioxidant content will generally be between 0.1 wt% to 5 wt%, and preferably between 0.1 wt% to 2 wt%, based on the overall weight of the liquid pigment dispersion.

The liquid colorant of the invention may comprise a defoaming agent. A defoaming agent is a chemical additive that reduces and hinders the formation of foam during processing of colorant. Examples of defoaming agents are insoluble oils, polydimethylsiloxanes, polyether siloxane copolymers and other silicones, certain alcohols, stearates and glycols. Commercially available defoaming agents are for example from Tego, Byk or Borchers.

The amount of defoaming agent is between 0.1 and 2 wt%, preferably between 0.1 and 1 wt%, more preferably between 0.1 and 0.5 wt%, relative to the total weight of the liquid colorant.

The liquid colorant of the invention may comprise a binder. The binders can be polymeric binders including latex polymers and solution polymers. Exemplary binders include but are not limited to acrylic copolymers, styrene/acrylic copolymers, vinyl acetate copolymers, vinyl acetate/acrylic copolymers, vinyl versatic acid ester/acrylic copolymers, ethylene/vinyl acetate copolymers, styrene/butadiene copolymers, polyesters, drying oil modified polymers such as polyesters and polyurethanes, polyamides, epoxy esters, polyureas, polyurethanes, polysiloxanes, silicones, fluorinated copolymers such as vinylidene fluoride, and blends of any of the above polymeric binders. The base paints, stains or colorants may include a component or components of a multicomponent (e.g., two component) reactive system for the binder such as a component of an isocyanate-polyamine, isocyanate-polyol, epoxy-polyamine, carbodiimide-polyacid, aziridine-polyacid, melamine-polyol, or urea formaldehyde-polyol system. The amount of binder is between 0 and 15 wt%, or for example 1 and 10 wt%, or 3 and 7 wt%, relative to the total weight of the liquid colorant.

The glass transition temperature for the polymeric binder may for example be about -20 to about +60 °C.

The liquid colorant of the invention may comprise a pH regulator. For the purposes of the present invention, the term "pH regulator" refers to compounds able to regulate the pH of the liquid colorant such that the desired pH of the colorant is obtained. Suitable pH regulator are sodium hydroxide and triethanolamine. Preferably, sodium hydroxide 25 % (w/v) aqueous solution and triethanolamine 99%. The preferred pH regulator is sodium hydroxide.

The amount of pH regulator is between 0.1 and 2 wt%, preferably between 0.1 and 1.5 wt%, more preferably between 0.1 and 1 wt%, relative to the total weight of the liquid colorant.

The liquid colorant of the invention can be prepared by any method known in the art that combines the pigment, the filler, the surfactant, the water, the guanidine, the iodo-preservative and the other optional excipients. The order of addition of the ingredients and whether done sequentially or simultaneously are not limited.

In a specific embodiment of the present invention the liquid colorant comprises
a) 5-65 wt% of a pigment
b) 0-30 wt% of a filler
c) 3-25 wt% of a surfactant
d) 20-80 wt% of water
e) 0.1-0.6 wt% of polyhexamethylene guanidine hydrochloride
f) 400-6000 ppm of IPBC
wherein the ppm and wt% is relative to the total weight of the liquid colorant and wherein said liquid colorant does not comprise isothiazolone.

The present invention also relates to a method for coloring a base paint, comprising the steps of providing a base paint and adding a sufficient amount of one or more colorants according to the invention as described above to prepare a colored paint. Base paint compositions are also commercially available. As will be understood by workers skilled in the art, any commercially available base paint may be used. To the base paint the liquid colorant of the invention is added in a sufficient amount to obtain the desired color. Typically, colorant may be added from 0.1% to 50% volume based to the total weight of the paint.

The present invention also relates to a paint comprising the liquid colorant as described above.

### Examples

A number of examples have been prepared to illustrate the invention.

Table 1 shows the Test results of liquid colorants free of Isothiazolone and comprising Xliquid^{®} and IPBC at t=0.

The liquid colorant compositions of table 1 are each comprising different pigments, in particular the universal (Uni.) pigments PBk7 (Pigment Black 7), PR122 (Pigment Red 122), PY42 (Pigment Yellow 42) and WB (water Borne) PR122 (Pigment Red 122).

The test methods cover the evaluation of the adequacy of protection of pigment pastes or colorants against microbial spoilage in the wet and dry states.

OK indicates that the adequacy of protection of pigment pastes or colorants is acceptable while NOK indicates that the adequacy of protection of pigment pastes or colorants is not acceptable.

The methods used are based or derived from the ASTM D2574-94 entitled, "Resistance of Emulsion Paints in the Container to Attack By Microorganisms and ASTM D5590-94 entitled "Determining the Resistance of Paint Films and Related Coatings for Algal Defacement".

| | | Sterility Check (T0) | | | | Challenge bacteria (T0) | | | | Challenge Fungal (T0) | | | | Dry Film (T0) | | | |
|---|---|---|---|---|---|---|---|---|---|---|---|---|---|---|---|---|---|
| Wt % Xliquid^{®} | IPBC [ppm] | Uni. PBk7 | Uni. PR122 | Uni. PY42 | WB PR122 | Uni. PBk7 | Uni. PR122 | Uni. PY42 | WB PR122 | Uni. PBk7 | Uni. PR122 | Uni. PY42 | WB PR122 | Uni. PBk7 | Uni. PR122 | Uni. PY42 | WB PR122 |
| 0 | 0 | NOK | NOK | NOK | NOK | NOK | NOK | NOK | NOK | NOK | NOK | NOK | NOK | NOK | NOK | NOK | NOK |
| 0.99 | 0 | OK | OK | OK | OK | OK | NOK | NOK | NOK | OK | OK | OK | NOK | NOK | NOK | OK | NOK |
| 0.99 | 250 | OK | OK | OK | OK | OK | NOK | NOK | NOK | OK | OK | OK | OK | NOK | NOK | OK | NOK |
| 0.99 | 500 | OK | OK | OK | OK | OK | NOK | OK | OK | OK | OK | OK | OK | OK | NOK | OK | NOK |
| 0.99 | 800 | OK | OK | OK | OK | OK | OK | OK | OK | OK | OK | OK | OK | OK | OK | OK | OK |

The test results show that in the absence of Xliquid^{®} and of IPBC the adequacy of protection of pigment pastes or colorants is not acceptable. The liquid colorants are not sterile, present bacterial and fungal and the formation of a dry film cannot be avoided.

When the liquid colorant of the invention comprises 0.99 wt% of Xliquid^{®} but no IPBC the bacterial presence could not be avoided in the liquid colorants comprising the pigments Uni. PR122, Uni. PY42 and WB PR122, as well dry film is formed in the liquid colorants comprising the pigments Uni. PBk7, Uni. PR122 and WB PR122.

When the liquid colorant of the invention comprises 0.99 wt% of Xliquid^{®} and 800 ppm of IPBC the adequacy of protection of pigment pastes or colorants, independently from its type, is acceptable.

### Experiment 1: Preparation of a liquid colorant

A number of examples have been prepared to illustrate the invention. The compositions of the liquid colorant are summarized in table 1.

**Table 1: List of used materials and recipes**

| | **Universal low VOC PY42** | **Univers al low VOC PBk7** | **Universal low VOC PR122** | **Universal low VOC PV23** | **Waterborn e low VOC PR122** |
|---|---|---|---|---|---|
| **Excipients** | wt% | wt% | wt% | wt% | wt% |
| Tap Water | 16.9 | 28.57 | 37.93 | 35.0 | 28.52 |
| PEG 400 (humectant) | 2.2 | 1.68 | 1.72 | 0 | 0 |
| Triethylene Glycol (humectant) | 0 | 0 | 0 | 0 | 5.58 |
| XLiquid^{®} 25% (polyguanidine biocide) | 0.99*a | 0.99*a | 0.99*a | 0.99*a | 0.99*a |
| Byk-023 (defoamer) | 0.2 | 0 | 0 | 0 | 0.34 |
| Byk-017 (defoamer) | 0 | 0.18 | 0 | 0 | 0 |
| Byk-024 (defoamer) | 0 | 0 | 0 | 0.5 | 0 |
| FoamStar SI 2250 (defoamer) | 0 | 0 | 0.17 | 0 | 0 |
| Soy Lecithin (surfactant) | 1.9 | 5.69 | 0 | 4.20 | 0 |
| Dispex AA 4145 (surfactant) | 0.3 | 0 | 0 | 0 | 0 |
| Amphoteen 24T (surfactant) | 2.2 | 0 | 0 | 2.42 | 0 |
| Agnique GLP 45 (surfactant) | 2.9 | 1.74 | 0 | 0 | 0 |
| DisperByk 185 (surfactant) | 1.0 | 1.88 | 2.66 | 0 | 0 |
| Agnique CSO-30 (surfactant) | 3.6 | 8.41 | 0 | 2.55 | 0 |
| Phospholan PE169 (surfactant) | 2.7 | 0 | 2.97 | 2.52 | 0 |
| Cithrol^{™} 4ML-LQ-(RB) (surfactant) | 0 | 4.80 | 0 | 5.49 | 0 |
| EmulsogenTS 200 (surfactant) | 0 | 0 | 2.76 | 0 | 0 |
| PER-64 (surfactant) | 0 | 0 | 0 | 2.79 | 0 |
| CLiQSPERSE 130 (surfactant) | 0 | 0 | 0 | 0.73 | 0 |
| BEROL 108 (surfactant) | 0 | 0 | 0 | 0 | 3.0 |
| Tego Dispers 750 W (surfactant) | 0 | 0 | 0 | 0 | 18.03 |
| Sodium Hydroxide 25 % (w/v) | 0.6 | 0.18 | 0 | 0.2 | 0.67 |
| Triethanolamine 99% | 0 | 0 | 0.79 | 0 | 0 |
| MIN-U-GEL 400 (filler) | 0.6 | 0 | 0 | 0 | 0 |
| Luzenac 10MO (filler) | 0 | 0 | 0 | 14.69 | 0 |
| Wondergloss PWG (BAG 20KG) (filler) | 0 | 0 | 0 | 9.61 | 6.06 |
| Portaryte B10 (filler) | 0 | 0 | 0 | 0 | 6.45 |
| Biocide IPBC / Acticide IPW 50 | 0.16*b | 0.16*b | 0.16*b | 0.16*b | 0.16*b |
| Pigment PY42 /Mapico Yellow Y1075AG (400 KG) | 59.0 | 0 | 0 | 0 | 0 |
| Pigment PBk7 / N772 Carbon Black | 0 | 35.0 | 0 | 0 | 0 |
| Pigment PR122 / TCR12203 | 0 | 0 | 28.0 | 0 | 0 |
| Pigment PR122 / Hostaperm Pink E | 0 | 0 | 0 | 0 | 19.13 |
| Pigment PV23 / Alpafast Violet RL AS 3609 | 0 | 0 | 0 | 7.81 | 0 |
| Tap Water (for final adjustment) | 4.75 | 10.72 | 21.85 | 10.35 | 11.07 |
| TOTALE | 100 | 100 | 100 | 100 | 100 |

| | | | | | |
|---|---|---|---|---|---|
| *a = effective 0,25 wt% Polyguanidine (0,99*0,25) *b = effective 800 ppm IPBC | | | | | |

The amounts of raw materials needed to prepare the liquid colorant are given in table 1 above. The procedure is the following: first, the liquid raw materials are weighted into a 10L vessel using a scale. The vessel is placed under a high shear dissolver, the solid materials are added and dispersed for 30 minutes under vacuum. The dispersion is then moved on a pearl mill and milled till particle size is typically around or below 15 µm. Measurement of the particle size is done with a Hegman gauge. Viscosity, color strength and color shade (according to CIE lab) are measured, and the liquid colorant is diluted to the required viscosity and color standard using water for this final adjustment.

### Experiment 2: Materials and Apparatus for the biocide tests

Balance, accurate to 0.1g.
Refrigerator, maintained at 10 to 13°C
Incubator, maintained at 32°C
Environmental Chamber, maintained at 28°C and 85-90% relative humidity
Laboratory oven, maintained at 50°C
Sterile cotton swabs
Screwcap plastic jars/container, 125 ml.
Agar plates: TSA, PDA, MA, YM, SAB
Tryptic soy broth, 10 ml in test tube
Mixed Bacterial Spore inoculum (sufficient to produce 108 to 109 CFU/ml)
Mixed Fungal Spore Inoculum (sufficient to produce 105 CFU/ml)

### Experiment 3: Pocedure Sterility Check

The sample was initially checked for sterility by direct streak onto Tryptic Soy Agar (TSA, for bacteria), Sabouraud Dextrose Agar (SAB, for yeast and molds), Yeast Malt Extract Agar (YM, for yeast and molds), and Potato Dextrose Agar (PDA, adjusted to pH 3.8 for molds and yeast) plates. The plates were incubated for 24-48 hours at 32□C for the detection of bacteria and 3-7 days at 28□C for fungal and yeast contaminants. Absence of microbial growth along the streak indicated that the corresponding sample did not contain viable microbial cells. The presence of microbial growth indicated non-sterility (sample contained viable microbial contamination). The level and type of contamination found (if any) for each sample is reported.

Samples are further examined for low levels of bacterial contamination by transferring an aliquot with a sterile cotton swab to Tryptic Soy Broth (TSB) in culture tubes. The tube was incubated for 24 hours at 32°C, streaked on TSA plate, and the plate incubated for 24-48 hours at 32°C.

### Experiment 4: Procedure In- Can preservation

Two 50 gram-samples were weighed in a plastic container. To each set of samples, one was inoculated with 0.50ml of the bacterial spore inoculum and the other one with 0.50ml of the fungal spore inoculum. The evaluation for adequacy of in-can preservation was performed by inoculating each sample (unprotected and protected sample) with a mixed culture of the following organisms:
Mixed Bacterial spore inoculum for bacterial spoilage
Pseudomonas aeruginosa
Enterobacter cloacae
Bacillus subtilis
Bacillus megaterium
Bacillus licheniformis
Mixed fungal spore inoculum for fungal spoilage
Penicillium funiculosum
Aspergillus niger

The inoculated samples were mixed homogenously and incubated at 32°C for the duration of the test. At appropriate intervals (after the first, the second, the third and the sixth day), the samples were checked for the presence of viable microorganisms by directly streaking the sample onto Tryptic Soy Agar (TSA) plates for bacteria and Potato Dextrose Agar (PDA, 3.8 pH) plates for fungi with a sterile cotton swab. The plates were incubated for 48 hours at 32□C for bacteria and 28°C, 80-90% relative humidity for 3 to 7 days for fungi. The plates were then rated on a scale of "0" to "4" based upon the number of colony forming units observed where a "0" rating would indicate that the sample is resistant to microbial spoilage in the container. A rating of "1" to "4" would indicate that the sample may not be adequately preserved against the test organisms ("4", being the worst failure). Those samples were considered adequately preserved in which sterility (a "0" rating) was attained within 3-5 days after the microbial challenges.

### Experiment 5: Procedure Dry film Preservation (Accelerated Fungal Defacement Assay)

An aliquot of the sample was streaked (circular form) on a Potato Dextrose Agar (PDA) plate. One ml of the fungal spore inoculum (same one used in the wet state challenge test) was uniformly distributed around the sample (by swirling the agar plate, avoiding any inoculum spreading on the surface of the sample) and let it stand for four weeks at room temperature. A weekly evaluation/rating is conducted throughout the duration of the test.

### Experiment 6: Procedure Storage Stability

A part of the samples is stored in an oven maintained at 50°C for 4-8 weeks. The samples are then subjected to the same tests: sterility, in-can preservation and dry-film test.

## Claims

1. Claim 1. A liquid colorant comprising
a) 5-65 wt% of a pigment
b) 0-30 wt% of a filler
c) 3-25 wt% of a surfactant
d) 20-80 wt% of water
e) 0.1-0.6 wt% of a polyguanidine biocide
f) 400-6000 ppm of a iodo-preservative
wherein the ppm and wt% is relative to the total weight of the liquid colorant and wherein said liquid colorant does not comprise isothiazolone.

2. A liquid colorant according to claim1 wherein the iodo-preservative is selected from the list of Iodine, p-[(diiodomethyl)sulphonyl]toluene and lodopropynyl Butyl Carbamate (IPBC) or a mixture thereof.

3. A liquid colorant according to claims 1 or 2 wherein the iodo-preservative is lodopropynyl Butyl Carbamate (IPBC).

4. A liquid colorant according to claims 1 to 3 wherein the iodo-preservative is present between 450-5000 ppm, more preferably 500-2000 ppm, even more preferably 700-1000 ppm.

5. A liquid colorant according to claims 1 to 4 wherein the polyguanidine biocide is selected from the list of polyhexamethylene guanidine, polyhexamethylene biguanidine, polyguanidine silicate and derivatives thereof.

6. A liquid colorant according to claims 1 to 5 wherein the polyguanidine biocide is selected from the list of polyguanidine silicate salts, polyhexamethylene guanidine hydrochloride, polyhexamethylene biguanidine hydrochloride, polyhexamethylene guanidine stearate, polyhexamethylene biguanidine stearate and polyhexamethylene guanidine molibidate.

7. A liquid colorant according to claims 1 to 6 wherein the polyguanidine biocide isa polyguanidine silicate salt.

8. A liquid colorant according to claims 1 to 7 wherein the polyguanidine biocide is present between 0.2-0.5 wt%, more preferably 0.3-0.4 wt%.

9. A liquid colorant according to claims 1 to 8 wherein the surfactant is selected from the list of soya Lecithin (Soy Lecithin), polyethyleenglycol-7 ricinoleate (PER-64), aqueous solution based on 1-Propanaminium and 3-amino-N-(carboxymethyl)-N,N-dimethyl derivatives and N-(C8-18 and C18-unsaturated acyl)derivatives (Agnique GLP 45), betaines coco alkyldimethyl (Amphoteen 24T), sotridecyl alcohol ethoxylate phosphate ester (Phospholan PE169),ethoxylated ester produced from polyethylene glycol and lauric acid (Cithrol^{™} 4ML-LQ-(RB)), solution of modified polyurethane (Disperbyk-185),acid phosphoric ester of a fatty alcohol ethoxylate (Lutensit A-EP), polycarboxylate in aqueous solution (Coadis BR 3), ethoxylated castor oil (Agnique CSO-30), acrylic block copolymer family of products made by Controlled Free Radical Polymerization (Dispex Ultra PX 4585), Sodium polyacrylate (Dispex AA 4145 or DisperByk 185), aqueous solution of a modified polymer with pigment affinity groups (Tego Dispers 750 W), non-ionic surfactant based on a synthetic primary alcohol (BEROL 185), Sotridecyl alcohol ethoxylate phosphate ester (Phospholan PE169), caster oil ethoxylates (BEROL 108), polymer preparations and compounds (Cliqsperse 130), tristyryl phenol-polyethylene glycol ether (Emulsogen TS 200) or a mixture thereof.

10. A liquid colorant according to claims 1 to 9 wherein the surfactant is soya Lecithin (Soy Lecithin), polyethyleenglycol-7 ricinoleate (PER-64), Sodium polyacrylate (Dispex AA 4145), betaines coco alkyldimethyl (Amphoteen 24T), aqueous solution based on 1-Propanaminium and 3-amino-N-(carboxymethyl)-N,N-dimethyl derivatives and N-(C8-18 and C18-unsaturated acyl)derivatives (Agnique GLP 45), Sodium polyacrylate (Dispex AA 4145 or DisperByk 185), ethoxylated castor oil (Agnique CSO-30), aqueous solution of a modified polymer with pigment affinity groups (Tego Dispers 750 W), Sotridecyl alcohol ethoxylate phosphate ester (Phospholan PE169), ethoxylated ester produced from polyethylene glycol and lauric acid (Cithrol^{™} 4ML-LQ-(RB)), caster oil ethoxylates (BEROL 108), polymer preparations and compounds (Cliqsperse 130), tristyryl phenol-polyethylene glycol ether (Emulsogen TS 200) or a mixture thereof.

11. A liquid colorant according to claims 1 to 10 further comprising a bromo-preservative.

12. A liquid colorant according to claim 11 wherein the bromo-preservative is 2,2-Dibromo-3-Nitrilopropionamide (DBNPA).

13. A liquid colorant according to claims 11 or 12 wherein the bromo-preservative is used in an amount of 10 to 150 ppm.

14. Method for coloring a base paint, comprising the steps of providing a base paint and adding a sufficient amount of one or more colorants according to anyone of claims 1-13 to prepare a colored paint.

15. A Paint comprising the liquid colorant according to anyone of claims 1-13.
